(19) Europäisches Patentamt
European Patent Office
Office européen des brevets

(11) **EP 4 174 138 A1**

(12) **EUROPEAN PATENT APPLICATION**
published in accordance with Art. 153(4) EPC

(43) Date of publication:
**03.05.2023 Bulletin 2023/18**

(21) Application number: **21833220.3**

(22) Date of filing: **28.06.2021**

(51) International Patent Classification (IPC):
**C08L 101/00** (2006.01)    **C08J 9/32** (2006.01)
**C08L 79/04** (2006.01)

(52) Cooperative Patent Classification (CPC):
**C08J 9/32; C08L 79/04; C08L 101/00**

(86) International application number:
**PCT/JP2021/024425**

(87) International publication number:
**WO 2022/004679 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.06.2020  JP 2020113026**

(71) Applicant: **NITTO DENKO CORPORATION**
**Ibaraki-shi**
**Osaka 567-8680 (JP)**

(72) Inventors:
• **MIMURA Takanobu**
**Ibaraki-shi, Osaka 567-8680 (JP)**
• **OTSUKA Tetsuya**
**Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **COMPOSITE MATERIAL, PREFORM FOR COMPOSITE MATERIAL, AND METHOD FOR PRODUCING COMPOSITE MATERIAL**

(57)    A composite material 1 includes a matrix 11 and a heat-conductive fiber 12. The matrix 11 includes an organic polymer and forms a porous structure. The heat-conductive fiber 12 is fixed in the porous structure by the matrix 11. A heat conductivity determined at ordinary temperature by a steady state heat flow method in a fiber axis direction of the heat-conductive fiber 12 is 10 W/(m•K) or more. A density d [g/cm$^3$] of the composite material 1 and a heat conductivity $\lambda$ [W/(m•K)] in a given direction of the composite material 1 satisfy requirements $d \leq 1.1$, $\lambda > 1$, and $4 \leq \lambda/d \leq 100$.

FIG. 1

EP 4 174 138 A1

**Description**

TECHNICAL FIELD

The present invention relates to a composite material, a preform for a composite material, and a method for manufacturing a composite material.

BACKGROUND ART

Composite materials including fibrous heat-conductive fillers are conventionally known.

For example, Patent Literature 1 describes a sheet-shaped heat-conductive formed body including a polymer matrix, a fibrous heat-conductive filler, and a powdery heat-conductive filler. The fibrous heat-conductive filler and the powdery heat-conductive filler are dispersed in the polymer matrix. The fibrous heat-conductive filler is oriented in a thickness direction of the sheet-shaped heat-conductive formed body. The polymer matrix is formed of a crosslinkable polymer compound yet to be cross-linked. The heat-conductive formed body has a plurality of pores. A portion of the fibrous heat-conductive filler penetrates the heat-conductive formed body in a thickness direction thereof.

Moreover, Patent Literatures 2 to 5 describe foams including a fibrous filler such as a carbon fiber. Patent Literature 4 also describes a heat-conductive foam sheet for electronic devices, the foam sheet including a flaky heat-conductive filler.

CITATION LIST

Patent Literature

Patent Literature 1: JP 2014-027144 A
Patent Literature 2: JP 2012-102263 A
Patent Literature 3: JP 2013-229591 A
Patent Literature 4: JP 2013-229592 A
Patent Literature 5: JP 2018-127617 A

SUMMARY OF INVENTION

Technical Problem

As the specific gravity of the heat-conductive formed body described in Patent Literature 1 exceeds 1.2, the technique described in Patent Literature 1 leaves room for reexamination in terms of reducing the weight of the material. Although the specific gravities of the foams described in Patent Literatures 2 to 5 are small, the heat conductivities of the foams are low. Therefore, the techniques described in Patent Literatures 2 to 5 leave room for reexamination in terms of increasing the heat conductivities of the materials.

Therefore, the present invention provides a new composite material having a reduced weight but a high heat conductivity. Moreover, the present invention provides a preform for a composite material, the preform being advantageous in manufacturing such a composite material. Furthermore, the present invention provides a method advantageous in manufacturing such a composite material.

Solution to Problem

The present invention provides a composite material having a porous structure, the composite material including:

a matrix including an organic polymer and forming the porous structure; and
a heat-conductive fiber fixed in the porous structure by the matrix, wherein
a heat conductivity determined at ordinary temperature by a steady state heat flow method in a fiber axis direction of the heat-conductive fiber is 10 W/(m•K) or more,
a density d [g/cm$^3$] of the composite material and a heat conductivity $\lambda$ [W/(m•K)] in a given direction of the composite material satisfy requirements d $\leq$ 1.1, $\lambda$ > 1, and 4 $\leq$ $\lambda$/d $\leq$ 100, and
the heat conductivity $\lambda$ is measured for one test specimen in a symmetric configuration according to an American Society for Testing and Materials (ASTM) standard D5470-01 (steady state longitudinal heat flow method).

The present invention also provides a composite material having a porous structure, the composite material including:

a matrix including an organic polymer and forming the porous structure; and
a heat-conductive fiber fixed in the porous structure by the matrix, wherein
the heat-conductive fiber extends from one end face of the composite material to the other end face of the composite material in a given direction of the composite material.

The present invention also provides a preform for a composite material, the preform including:

a matrix including an organic polymer;
a heat-conductive fiber fixed by the matrix and extending along a given direction; and
a blowing agent dispersed in the matrix.

The present invention also provides a method for manufacturing a composite material having a porous structure, the method including:

supplying a matrix including an organic polymer around a heat-conductive fiber disposed to extend along a given direction; and
foaming the matrix to form the porous structure, wherein
a heat conductivity determined at ordinary temperature by a steady state heat flow method in a fiber axis direction of the heat-conductive fiber is 10 W/(m·K) or more.

The present invention also provides a composite material having a porous structure, the composite material including:

a matrix including an organic polymer and forming the porous structure; and
a carbon fiber fixed in the porous structure by the matrix, wherein
a heat conductivity $\lambda_{cf}$ determined at ordinary temperature by the following equation (A) in a fiber axis direction of the carbon fiber is 10 W/(m·K) or more,
a density d [g/cm$^3$] of the composite material and a heat conductivity $\lambda$ [W/(m·K)] in a given direction of the composite material satisfy requirements d ≤ 1.1, $\lambda$ > 1, and 4 ≤ $\lambda$/d ≤ 100, and
the heat conductivity $\lambda$ is measured for one test specimen in a symmetric configuration according to an American Society for Testing and Materials (ASTM) standard D5470-01 (steady state longitudinal heat flow method),

$$\lambda_{cf} \text{ [W/(m·K)]} = 1272.4/\text{ER [μΩm]} - 49.4 \qquad \text{Equation (A),}$$

where ER represents a specific electrical resistance of the carbon fiber.

Advantageous Effects of Invention

The above composite material has a reduced weight and a high heat conductivity in the given direction.

BRIEF DESCRIPTION OF DRAWINGS

FIG. 1 is a perspective view showing an example of a composite material according to the present invention.
FIG. 2 is a cross-sectional view of the composite material along a plane II shown in FIG. 1.
FIG. 3 shows an example of a method for manufacturing a composite material.
FIG. 4 is a perspective view showing a heat dissipation structure including the composite material shown in FIG. 1.
FIG. 5 is a scanning electron microscope (SEM) photograph of a sample according to Example 1.

DESCRIPTION OF EMBODIMENTS

It is thought that an increase in the amount of a heat-conductive filler in a composite material is advantageous in increasing the heat conductivity of the composite material using the heat-conductive filler. However, from the viewpoint of reducing the weight of the composite material, it cannot be said that an increase of the amount of the heat-conductive filler in the composite material is advantageous. Meanwhile, it is conceivable that the composite material is reduced in weight by foaming; however, it has been thought that formation of pores by foaming is disadvantageous from the viewpoint of increasing the heat conductivity of the material.

In view of these circumstances, the present inventors made intensive studies to newly develop a novel composite material having a reduced weight but a high heat conductivity. Through much trial and error, the present inventors have newly found that the heat conductivity of a composite material having a porous structure can be increased in a given direction while the density of the composite material is maintained at a low level, and have completed the present invention.

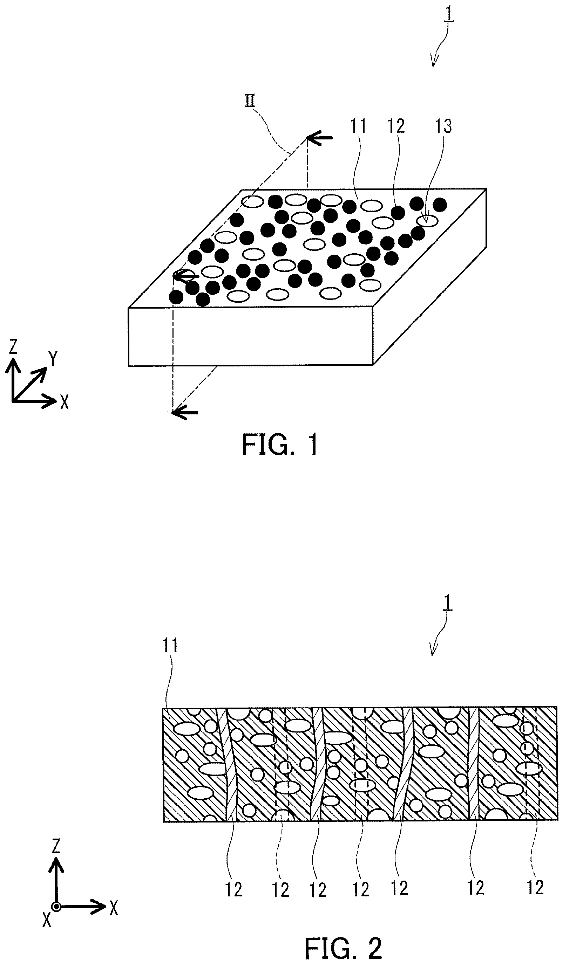

Embodiments of the present invention will be described hereinafter with reference to the drawings. The following description describes examples of the present invention, and the present invention is not limited to the following embodiments. The X axis, the Y axis, and the Z axis shown in FIGS. 1, 2, and 4 are perpendicular to each other.

As shown in FIG. 1, a composite material 1 has a porous structure, and has a large number of pores 13. The composite material 1 includes a matrix 11 and a heat-conductive fiber 12. The matrix 11 includes an organic polymer and forms a porous structure. The heat-conductive fiber 12 is fixed in the porous structure by the matrix 11. A heat conductivity determined at ordinary temperature by a steady state heat flow method in a fiber axis direction of the heat-conductive fiber 12 is, for example, 10 W/(m•K) or more. The steady state heat flow method is, for example, a method described in Fujishiro, et al., TEION KOGAKU, vol. 28, page 533 (1993). The ordinary temperature is, as defined in Japanese Industrial Standards (JIS) Z 8703, 20°C$\pm$15°C. A density d [g/cm$^3$] of the composite material 1 and a heat conductivity $\lambda$ [W/(m•K)] in a given direction of the composite material 1 satisfy, for example, requirements d $\leq$ 1.1, $\lambda$ > 1, and 4 $\leq$ $\lambda$/d $\leq$ 100. The heat conductivity $\lambda$ is measured for one test specimen in a symmetric configuration according to ASTM D5470-01 (steady state longitudinal heat flow method).

Since the density d and the heat conductivity $\lambda$ satisfy the above requirements, the composite material 1 has a reduced weight and a high heat conductivity in the given direction. The density d as used herein means an apparent density.

The density d of the composite material 1 is not limited to a particular value as long as the above requirements are satisfied. From the viewpoint of reducing the weight of the composite material 1, the density d is desirably 1.0 g/cm$^3$ or less, more desirably 0.9 g/cm$^3$ or less, even more desirably 0.8 g/cm$^3$ or less, particularly desirably 0.7 g/cm$^3$ or less. The density d is, for example, 0.05 g/cm$^3$ or more, and may be 0.06 g/cm$^3$ or more, 0.07 g/cm$^3$ or more, 0.08 g/cm$^3$ or more, 0.09 g/cm$^3$ or more, or 0.10 g/cm$^3$ or more.

The heat conductivity $\lambda$ in the given direction of the composite material 1 is not limited to a particular value as long as the above requirements are satisfied. The heat conductivity $\lambda$ is desirably 1.1 W/(m•K) or more, more desirably 1.2 W/(m•K) or more, even more desirably 1.3 W/(m•K) or more, particularly desirably 1.4 W/(m•K) or more, especially desirably 1.5 W/(m•K) or more. The heat conductivity $\lambda$ is, for example, 20 W/(m•K) or less, and may be 10 W/(m•K) or less, or 5 W/(m•K) or less.

In the composite material 1, the value of $\lambda$/d is desirably 4.5 or more, more desirably 5.0 or more, even more desirably 5.5 or more. The value of $\lambda$/d may be 90 or less, 80 or less, 70 or less, 60 or less, 50 or less, 40 or less, 30 or less, 20 or less, or 15 or less.

The organic polymer included in the matrix 11 is not limited to a particular polymer. The matrix 11 includes, for example, at least one selected from the group consisting of a thermoplastic resin, a thermoplastic elastomer, and a rubber. Examples of the thermoplastic resin include low-density polyethylene (LDPE), polyethylene (PE), polypropylene, ethylene-$\alpha$-olefin copolymers such as ethylene-propylene copolymer, polymethylpentene, polyvinyl chloride, polyvinylidene chloride, polyvinyl acetate, ethylene-vinyl acetate copolymer, polyvinyl alcohol, polyvinyl acetal, fluorine resins such as polyfluorene vinylidene and tetrafluoroethylene, polyethylene terephthalate, polybutylene terephthalate, polyethylene naphthalate, polystyrene, polyacrylonitrile, ABS resin, polyphenylene ether, polyamide, polyimide, polymethacrylic acid ester resin, polyacrylic acid-based resin, polycarbonate, polyphenylene sulfide, polysulfone, polyethersulfone, and polyetherketone. Examples of the thermoplastic elastomer include ester-based thermoplastic elastomers, olefin-based thermoplastic elastomers, urethane-based thermoplastic elastomers, and styrene-based thermoplastic elastomers. Examples of the rubber include a natural rubber and a synthetic rubber. Examples of the synthetic rubber include chloroprene rubber, ethylene propylene rubber, nitrile rubber, silicone rubber, and styrene-butadiene rubber.

The matrix 11 desirably includes the thermoplastic resin or the thermoplastic elastomer. In this case, the heat-conductive fiber 12 is easily impregnated with the organic polymer, and a desired porous structure is likely to be achieved in the matrix 11.

A melt mass-flow rate (MFR) of the organic polymer included in the matrix 11 is not limited to a particular value. The MFR is measured according to Japanese Industrial Standards (JIS) K7210-1: 2014 at 190°C and a nominal load of 2.16 kg. The MFR of the organic polymer is, for example, 1 g/10 minutes to 100 g/10 minutes. Because of this, in manufacturing of the composite material 1, the material of the matrix 11 can be supplied in a desired state around the heat-conductive fiber 12, and a desired porous structure of the matrix 11 is likely to be obtained. The value "1 g/10 minutes" can include a value that can be rounded to "1 g/10 minutes". The MFR of the organic polymer may be 2 g/10 minutes or more, or 3 g/10 minutes or more. The MFR of the organic polymer may be 90 g/10 minutes or less, or 80 g/10 minutes or less. In some cases, the MFR of the organic polymer may be 0.1 g/10 minutes or more, 0.2 g/10 minutes or more, 0.3 g/10 minutes or more, or 0.4 g/10 minutes or more.

As shown in FIGS. 1 and 2, the composite material 1 has a porous structure. The porosity of the composite material 1 is not limited to a particular value as long as the density d and the heat conductivity $\lambda$ satisfy the above requirements. The composite material 1 has, for example, a porosity of 30% to 95%. Because of this, the composite material 1 is likely to be reduced in wight and have a desired mechanical strength. The porosity of the composite material 1 is desirably 31%, more desirably 33%, even more desirably 35% or more, particularly desirably 40% or more. The porosity of the composite material 1 may be 90% or less, or 85% or less.

In the composite material 1, the pore 13 is formed, for example, as a closed cell. In the composite material 1, the pore 13 may be formed as a continuous open cell. The pores 13 may include both a closed cell and a continuous open cell.

The heat conductivity $\lambda$ of the composite material 1 is defined, for example, in the Z axis direction shown in FIGS. 1 and 2. As shown in FIG. 2, the heat-conductive fiber 12 extends, for example, along the given direction (Z axis direction). In other words, a plurality of the heat-conductive fibers 12 extend along the same direction (Z axis direction). Because of this, the heat conductivity $\lambda$ in the given direction of the composite material 1 is likely to be high.

As shown in FIG. 2, the heat-conductive fiber 12 extends, for example, from one end face of the composite material 1 to the other end face of the composite material 1 in the given direction (Z axis direction). In other words, the heat-conductive fiber 12 extends to penetrate the composite material 1 in the given direction (Z axis direction). Because of this, the composite material 1 has a reduced weight and a high heat conductivity in the given direction. In this case, the density d [g/cm$^3$] of the composite material 1 and the heat conductivity $\lambda$ [W/(m•K)] in the given direction of the composite material 1 may satisfy the requirements d $\leq$ 1.1, $\lambda$ > 1, and 4 $\leq$ $\lambda$/d $\leq$ 100, or may satisfy requirement other than these. Additionally, the heat conductivity determined at ordinary temperature by the steady state heat flow method in the fiber axis direction of the heat-conductive fiber 12 may be 10 W/(m•K) or more, or less than 10 W/(m•K). For example, the heat-conductive fiber 12 has a higher heat conductivity than the heat conductivity of the matrix 11.

The heat conductivity determined at ordinary temperature by the steady state heat flow method in the fiber axis direction of the heat-conductive fiber 12 is, as described above, 10 W/(m•K) or more. Because of this, the heat conductivity $\lambda$ in the given direction of the composite material 1 is likely to be high. This heat conductivity of the heat-conductive fiber 12 is desirably 20 W/(m•K) or more, or desirably 30 W/(m•K) or more. In this case, the composite material 1 is likely to have a high heat conductivity in the given direction. The heat conductivity of the heat-conductive fiber 12 is, for example, 1000 W/(m•K) or less.

The specific gravity of the heat-conductive fiber 12 is not limited to a particular value as long as the density d of the composite material 1 satisfies the above requirements. The heat-conductive fiber 12 has, for example, a specific gravity of 2.3 or less. The specific gravity of the heat-conductive fiber 12 is desirably 2.2 or less, more desirably 1.9 or less, even more desirably 1.8 or less, especially desirably 1.7 or less. The specific gravity of the heat-conductive fiber 12 is, for example, 0.9 or more, and may be 1.0 or more, 1.1 or more, 1.2 or more, 1.3 or more, or 1.4 or more.

The heat-conductive fiber 12 is not limited to a particular fiber. Examples of the heat-conductive fiber 12 include a carbon fiber and an organic polymer fiber. Examples of the organic polymer fiber include ultrahigh molecular weight polyethylene fiber and a polybenzazole fiber.

The heat-conductive fiber 12 is desirably a polybenzazole fiber. In this case, the heat-conductive fiber 12 is likely to have favorable electrical insulating properties.

The heat-conductive fiber 12 may be a carbon fiber. In this case, a heat conductivity $\lambda_{cf}$ at ordinary temperature in a fiber axis direction of the carbon fiber is, for example, 10 W/(m•K) or more. The heat conductivity $\lambda_{cf}$ may be determined, as described above, by the steady state heat flow method, or may be determined by the following equation (A) instead of the steady state heat flow method. Either the heat conductivity $\lambda_{cf}$ determined by the steady state heat flow method or the heat conductivity $\lambda_{cf}$ determined by the equation (A) can be 10 W/(m•K) or more. In the equation (A), ER represents a specific electrical resistance of the carbon fiber. For example, it is understood from JP 3648865 B2 that the heat conductivity of the carbon fiber can be estimated by the equation (A) on the basis of a correlation between the heat conductivity of the carbon fiber and the specific electrical resistance thereof.

$$\lambda_{cf} \text{ [W/(m•K)]} = 1272.4/\text{ER [μΩm]} - 49.4 \qquad \text{Equation (A)}$$

The thickness of the heat-conductive fiber 12 is not limited to a particular value as long as the heat conductivity $\lambda$ in the given direction of the composite material 1 satisfies the above requirements. The thickness of the heat-conductive fiber 12 is, for example, 30 μm or less. In this case, the heat-conductive fiber 12 is likely to be uniformly present in the composite material 1, and the heat-transfer properties of the composite material 1 and the mechanical properties thereof are unlikely to spatially vary. The thickness of the heat-conductive fiber 12 may be 20 μm or less, or 16 μm or less. The

thickness of the heat-conductive fiber 12 is, for example, 6 μm or more. In this case, the heat-conductive fiber 12 is easily handled in manufacturing of the composite material 1. The thickness of the heat-conductive fiber 12 may be 8 μm or more, or 10 μm or more.

A ratio of the volume of the organic polymer forming the matrix 11 to the total volume of the composite material 1 is not limited to a particular value. The ratio is, for example, 5 volume% or more, and may be 7 volume% or more, or 10 volume% or more. The ratio is, for example, 50 volume% or less, and may be 45 volume% or less.

A ratio of the volume of the heat-conductive fiber 12 to the total volume of the composite material 1 is not limited to a particular value. The ratio is, for example, 1 volume% or more, and may be 2 volume% or more, or 3 volume% or more. The ratio is, for example, 30 volume% or less, and may be 25 volume% or less.

The shape of the composite material 1 is not limited to a particular shape. As shown in FIG. 1, the composite material 1 may have a plate shape. The composite material 1 may have a sheet shape, a strip shape, a belt shape, a block shape, or a columnar shape.

One exemplary method for manufacturing the composite material 1 will be described. This method includes, for example, the following steps (I) and (II).

(I) Supplying a matrix 11a including the organic polymer around the heat-conductive fiber 12 disposed to extend along the given direction
(II) Foaming the matrix 11a supplied in (I) to form a porous structure

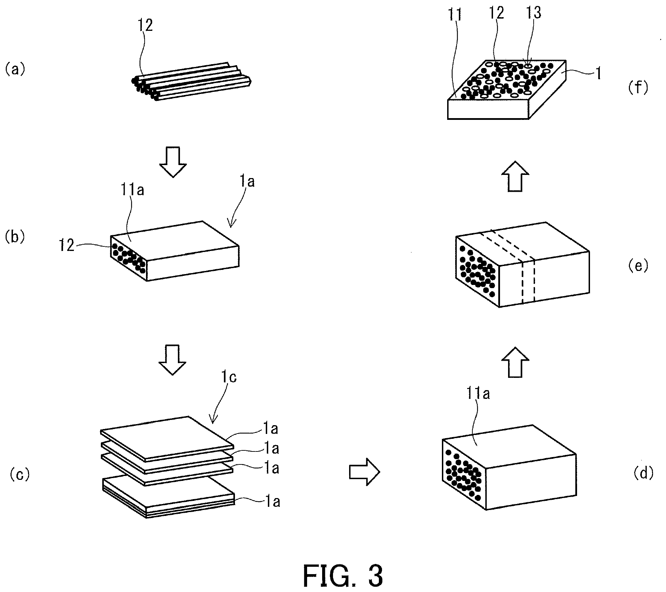

As shown in (a) of FIG. 3, the heat-conductive fiber 12 is disposed to extend along the given direction. In other words, the plurality of heat-conductive fibers 12 are disposed to extend along the same direction. At this time, if necessary, a bundle of the heat-conductive fibers 12 is spread in a planar fashion. Next, as shown in (b) of FIG. 3, the matrix 11a including the organic polymer is supplied around the heat-conductive fiber 12. For example, a composite including the heat-conductive fiber 12 and the matrix 11a is formed into a given shape to obtain a preform 1a for a composite material. In the preform 1a for a composite material, the heat-conductive fiber 12 is fixed by the matrix 11a. A blowing agent is dispersed in the matrix 11a.

The blowing agent dispersed in the matrix 11a is not limited to a particular blowing agent. Examples of the blowing agent include a thermo-expandable microcapsule and a chemical blowing agent. In the thermo-expandable microcapsule, for example, a liquid substance capable of evaporating by heating is encapsulated in a thermoplastic resin shell. Thermal decomposition of the chemical blowing agent generates a particular gas. Examples of the chemical blowing agent include azodicarbonamide, benzenesulfonyl hydrazide, dinitrosopentamethylenetetramine, toluenesulfonyl hydrazide, and 4,4-oxybis(benzenesulfonyl hydrazide). These may be used alone, or two or more may be used in combination.

The method for manufacturing the composite material 1 may further include, for example, a step of hot-pressing the heat-conductive fiber 12 and the matrix 11a present around the heat-conductive fiber 12. In this case, the heat-conductive fiber 12 is easily impregnated with the organic polymer included in the matrix 11a.

The MFR measured for the organic polymer according to JIS K 7210-1: 2014 at 190°C and a nominal load of 2.16 kg is, for example, 1 g/10 minutes to 100 g/minutes. In this case, the matrix 11a can be supplied in a desired state around the heat-conductive fiber 12, and the heat-conductive fiber 12 can be fixed favorably by the matrix 11a.

As shown in (c) of FIG. 3, if necessary, a plurality of the preforms 1a for a composite material are stacked to form a laminate 1c. If necessary, the laminate 1c is hot-pressed.

As shown in (d) of FIG. 3, the matrix 11a is foamed in the preform 1a for a composite material. For example, due to the action of the blowing agent dispersed in the matrix 11a, the matrix 11a is foamed by heating the preform 1a for a composite material at a given temperature. As shown in (e) of FIG. 3, a portion of a product resulting from foaming of the matrix 11a is cut out, if necessary. The composite material 1 can be obtained thereby as shown in (f) of FIG. 3.

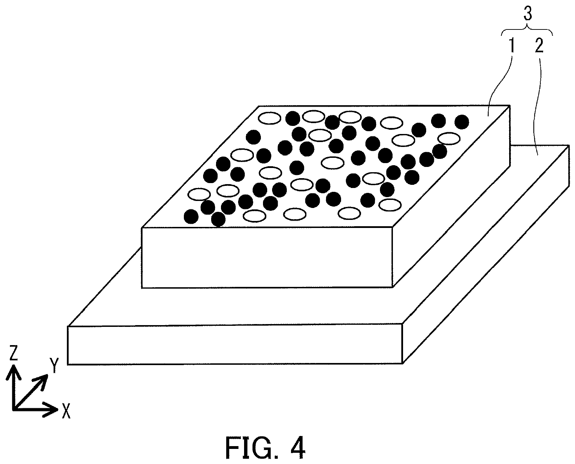

The application of the composite material 1 is not limited to a particular application. For example, a heat dissipation can be provided using the composite material 1. As shown in FIG. 4, a heat dissipation 3 includes the composite material 1 and a heating element 2. The composite material 1 is attached on a surface of the heating element 2. Accordingly, heat generated in the heating element 2 can be dissipated to the outside thereof. The heating element 2 is not limited to a particular heating element, and is, for example, a component or housing of an electronic device.

For example, a direction perpendicular to a boundary plane between the composite material 1 and the heating element 2 corresponds to the given direction. The heat-conductive fiber 12 of the composite material 1 extends, for example, along the direction perpendicular to the boundary plane between the composite material 1 and the heating element 2. Accordingly, heat generated in the heating element 2 is immediately dissipated to the outside of the heating element 2. For example, the heat conductivity in the given direction of the composite material 1 is higher than the heat conductivity of the composite material 1 in a direction parallel to the boundary plane between the composite material 1 and the heating element 2.

EXAMPLES

Hereinafter, the present invention will be described in more detail with reference to examples. The present invention is not limited to the following examples. First, methods for evaluation of the examples will be described.

(Measurement of heat conductivity $\lambda$)

Test pieces for measuring the heat conductivity $\lambda$ were produced from samples according to Examples and Comparative Examples. Each test piece had a plate shape and was a 20-mm$^2$ square in plan view. The test pieces of Examples and Comparative Examples 1 and 2 each had a thickness of 5000 $\mu$m. The test piece of Comparative Example 3 had a thickness of 1200 $\mu$m, the test piece of Comparative Example 4 had a thickness of 3000 $\mu$m, and the test piece of Comparative Example 5 had a thickness of 2000 $\mu$m. A polyparaphenylene benzobisoxazole (PBO) fiber or a carbon fiber extended along the thickness direction of each of the test pieces according to Examples and Comparative Example 2. A silicone oil compound G-747 manufactured by Shin-Etsu Silicones was applied to both surfaces of each test piece to obtain a test block. The silicone oil compound had a heat conductivity of 0.90 W/(m·K).

The heat conductivity $\lambda$ in the thickness direction of each test piece was measured for one test specimen in a symmetric configuration by a heat flow meter method according to ASTM D5470-01 (steady state longitudinal heat flow method) using a heat conductivity measurement apparatus TCM 1001 manufactured by RHESCA Co., LTD. An upper rod having a heating block (80°C) and a lower rod having a cooling block (20°C) were used as standard rods. The test block was sandwiched by blocks made of oxygen-free copper, and the test block and the blocks made of oxygen-free copper were sandwiched between the upper rod and the lower rod. Heat was allowed to flow in the thickness direction of the test piece.

A temperature difference $\Delta T_S$ between the upper and lower surfaces of the test piece was determined by the following equations (1) and (2). In the equations (1) and (2), $\Delta T_C$ represents a temperature difference between the upper surface of the upper block made of oxygen-free copper and the lower surface of the lower block made of oxygen-free copper. Additionally, $q_1$ represents a heat flux [W/m$^2$] determined by a temperature gradient based on temperature differences between temperature measurement points on the upper rod and distances between these temperature measurement points, and $q_2$ represents a heat flux [W/m$^2$] determined by a temperature gradient based on temperature differences between temperature measurement points on the lower rod and distances between these temperature measurement points. A symbol $t_b$ represents the sum of the thicknesses of the blocks made of oxygen-free copper. A symbol $k_b$ represents the heat conductivity of each block made of oxygen-free copper.

$$\Delta T_S = \Delta T_C - (q_S \times t_b)/k_b \qquad \text{Equation (1)}$$

$$q_S = (q_1 + q_2)/2 \qquad \text{Equation (2)}$$

The heat conductivity $\lambda$ [W/(m·K)] in the thickness direction of the test piece was determined by the following equation (3). Table 1 shows the result. The symbol t in the equation (3) represents the thickness of the test piece.

$$\lambda = q_S \times t/\Delta T_S \qquad \text{Equation (3)}$$

(Measurement of density d)

The apparent density of each of the samples according to Examples and Comparative Examples was measured according to JIS K 7222: 2005 to determine the density d. Table 1 shows the results.

(Measurement of porosity)

The porosity $\varphi$ of each of the samples according to Examples and Comparative Example 1 was determined by the following equation (4). Table 1 shows the results. In the equation (4), $V_1$ represents the volume of the preform before foaming, and $V_2$ represents the volume of the sample after the foaming.

$$\varphi = 100 \times (V_2 - V_1)/V_2 \qquad \text{Equation (4)}$$

<Example 1>

A low-density polyethylene FLO-THENE UF80 manufactured by Sumitomo Seika Chemicals Co., Ltd. and a thermo-expandable microcapsule FN-180D manufactured by Matsumoto Yushi-Seiyaku Co., Ltd. were uniformly kneaded to obtain a kneaded product. In this kneaded product, the amount of the low-density polyethylene was 85 mass%, and the amount of the thermo-expandable microcapsule was 15 mass%. FLO-THENE is a registered trademark of Sumitomo Seika Chemicals Co., Ltd. The MFR measured for the low-density polyethylene FLO-THENE UF80 according to JIS K 7210-1: 2014 at 190°C and a nominal load of 2.16 kg was 75 g/10 minutes. The kneaded product was formed into a sheet shape by hot press to obtain a matrix sheet according to Example 1 having a thickness of 100 $\mu$m. The matrix sheet according to Example 1 had a rectangular shape in plan view.

A PBO fiber Zylon HM 1992 manufactured by TOYOBO CO., LTD. was wound so as to almost entirely cover each surface of the matrix sheet. A wound body was obtained in this manner. The PBO fiber had a thickness of 12 $\mu$m. The heat conductivity determined at ordinary temperature by the steady state heat flow method described in Fujishiro, et al., TEION KOGAKU, vol. 28, page 533 (1993) in a fiber axis direction of the PBO fiber was 50 W/(m•K). Zylon is a registered trademark of TOYOBO CO., LTD. In the wound body, the PBO fiber extended along a direction parallel to a pair of sides of the matrix sheet when viewed in plan. A pair of other matrix sheets according to Example 1 were separately placed on the surfaces of the wound body to obtain a laminate. Another PBO fiber was wound so as to almost entirely cover each surface of the laminate. A wound body was obtained in this manner. Placing a pair of matrix sheets on the two surfaces of the wound body and winding a PBO fiber to almost entirely cover each surface of the laminate were repeated two or more times to obtain a composite. The composite was hot-pressed to obtain a preform. As to the conditions of the hot press, the temperature was adjusted to be lower than a temperature at which expansion of the thermo-expandable microcapsule starts, and the pressure was adjusted so as not to break the thermo-expandable microcapsule.

The preform was heated to a given temperature to cause thermal expansion of the thermo-expandable microcapsule, and the matrix sheets in the preform were foamed thereby. A formed foam body was obtained in this manner. A plurality of pieces obtained by cutting a portion of the formed foam body into slips were arranged to obtain a plate-shaped sample according to Example 1. The PBO fibers extended along the thickness direction of the sample. The PBO fibers extended from one end face to the other end face in the thickness direction of the sample. Ratios of the volume of the low-density polyethylene, the volume of the PBO fibers, and the volume of pores to the total volume of the sample were respectively 15%, 4%, and 81%.

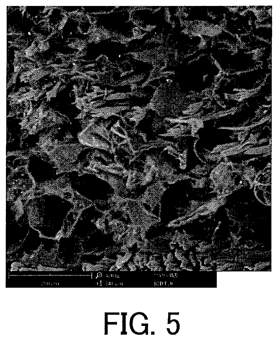

FIG. 5 shows a SEM photograph of the sample according to Example 1. A large number of the pores were formed in the sample according to Example 1 as shown in FIG. 5, which confirms that the sample according to Example 1 had a porous structure.

<Examples 2 to 7>

Samples according to Examples 2 to 7 were each produced in the same manner as in Example 1, except that the amount of the matrix sheets, the amount of the PBO fibers, and the conditions for foaming the matrix sheets were adjusted so that the ratios of the volume of the low-density polyethylene, the volume of the PBO fibers, and the volume of the pores to the total volume of the sample would be as shown in Table 1.

<Example 8>

A mixture obtained by dry-blending a random polypropylene WINTEC grade WFW4 manufactured by Japan Polypropylene Corporation and a thermo-expandable-microcapsule-including masterbatch MBF-260EVA50 manufactured by Matsumoto Yushi-Seiyaku Co., Ltd. was molten and kneaded using a single-screw extruder to obtain a kneaded product. In this kneaded product, the amount of the random polypropylene was 90 mass%, and the amount of the thermo-expandable-microcapsule-including masterbatch was 10 mass%. WINTEC is a registered trademark of Japan Polypropylene Corporation. The MFR measured for the random polypropylene according to JIS K 7210-1: 2014 at 190°C and a nominal load of 2.16 kg was 2.4 g/10 minutes. The kneaded product was formed into a film using a T-die to obtain a matrix sheet having a thickness of 100 $\mu$m.

A PBO fiber Zylon HM 1992 was wound so as to almost entirely cover each surface of the matrix sheet. A wound body was obtained in this manner. Placing a pair of matrix sheets on the two surfaces of the wound body to obtain a laminate and winding a PBO fiber to almost entirely cover each surface of the laminate were repeated two or more times to obtain a composite. The composite was hot-pressed to obtain a preform. For the hot press, the temperature was adjusted to be lower than a temperature at which expansion of the thermo-expandable microcapsule starts, and the pressure was adjusted so as not to break the thermo-expandable microcapsule.

The preform was heated to a given temperature to cause thermal expansion of the thermo-expandable microcapsule, and the matrix sheets in the preform were foamed thereby. A formed foam body was obtained in this manner. A plurality of pieces obtained by cutting a portion of the formed foam body into slips were arranged to obtain a plate-shaped sample according to Example 8. The PBO fibers extended along the thickness direction of the sample. The PBO fibers extended from one end face to the other end face in the thickness direction of the sample. The ratios of the volume of the random polypropylene, the volume of the PBO fibers, and the volume of pores to the total volume of the sample were respectively 33%, 7%, and 60%.

<Example 9>

A sample according to Example 9 was obtained in the same manner as in Example 8, except for the following points. A low-density polyethylene Suntec F2270 manufactured by Asahi Kasei Corporation was used instead of the random polypropylene. Suntec is a registered trademark of Asahi Kasei Corporation. The MFR measured for this low-density polyethylene according to JIS K 7210-1: 2014 at 190°C and a nominal load of 2.16 kg was 7 g/10 minutes. The thickness of the matrix sheet obtained by formation using a T-die was adjusted to 50 $\mu$m. The number of times the PBO fibers were wound was adjusted to be different from that in Example 8. The ratios of the volume of the low-density polyethylene, the volume of the PBO fibers, and the volume of the pores to the total volume of the sample were respectively 18%, 4%, and 78%.

<Example 10>

A matrix sheet having a thickness of 50 $\mu$m was obtained in the same manner as in Example 9. This matrix sheet was cut into a rectangular shape. A carbon fiber DIALEAD K13916 manufactured by Mitsubishi Chemical Corporation and having the same length as a long side of the rectangular matrix sheet was separated and disposed to entirely cover one surface of the matrix sheet along a direction parallel to the long side. DIALEAD is a registered trademark of Mitsubishi Chemical Corporation. The heat conductivity determined at ordinary temperature by the above equation (A) in a fiber axis direction of the carbon fiber was 200 W/(m•K). Another matrix sheet cut into a rectangular shape was stacked on the carbon fiber, and another carbon fiber K13916 having the same length as a long side of the rectangle was separated and arranged thereon so as to cover the entire surface of the matrix sheet along the direction parallel to the long side. This procedure was repeated a given number of times to obtain a composite. The composite was hot-pressed to obtain a preform. The preform was heated to a given temperature to cause thermal expansion of the thermo-expandable microcapsule, and the matrix sheets in the preform were foamed thereby. A formed foam body was obtained in this manner. A plurality of pieces obtained by cutting a portion of the formed foam body into slips were arranged to obtain a plate-shaped sample according to Example 10. The ratios of the volume of the low-density polyethylene, the volume of the carbon fibers, and the volume of pores to the total volume of the sample were respectively 29%, 10%, and 61%.

<Example 11>

A low-density polyethylene F2270 and a chemical blowing agent Unifoam AZ #1100-I manufactured by Otsuka Chemical Co., Ltd. were molten and kneaded using a co-rotating twin-screw extruder ZSK32Mc18 manufactured by Coperion GmbH to obtain a kneaded product. This co-rotating twin-screw extruder has a screw diameter $\varphi$ of 32 mm and an LID ratio of 53. In the kneaded product, a ratio of the amount of the chemical blowing agent to the amount of the low-density polyethylene was 6/100 on a mass basis. The kneaded product was molten and kneaded using a single-screw extruder, and was formed into a matrix sheet having a thickness of 25 $\mu$m using a T-die. In the formation using the T-die, the temperature was adjusted to less than a temperature at which the chemical blowing agent is foamed.
The matrix sheet was irradiated with an electron beam at an accelerating voltage of 150 kV and a dose of 50 kGy.
A PBO fiber Zylon HM 1992 was wound so as to almost entirely cover each surface of the matrix sheet. A wound body was obtained in this manner. Placing a pair of matrix sheets on the two surfaces of the wound body to obtain a laminate and winding a PBO fiber to almost entirely cover each surface of the laminate were repeated two or more times to obtain a composite. The composite was hot-pressed to obtain a preform. For the hot press, the temperature was adjusted to less than a temperature at which the chemical blowing agent is foamed.
The preform was heated to a given temperature to cause foaming of the chemical blowing agent, and the matrix sheets in the preform were foamed thereby. A formed foam body was obtained in this manner. A plurality of pieces obtained by cutting a portion of the formed foam body into slips were arranged to obtain a plate-shaped sample according to Example 11. The ratios of the volume of the low-density polyethylene, the volume of the PBO fibers, and the volume of pores to the total volume of the sample were respectively 62%, 5%, and 33%.
A metallocene-based low-density polyethylene SUMIKATHENE EP CU7002 manufactured by SUMITOMO CHEMICAL COMPANY, LIMITED and a chemical blowing agent Vinyfor AC#93 manufactured by EIWA CHEMICAL IND. CO., LTD. were molten and kneaded using a co-rotating twin-screw extruder TEX30α manufactured by The Japan Steel Works, Ltd. to obtain a kneaded product. The MFR measured for this low-density polyethylene according to JIS K 7210-1: 2014 at 190°C and a nominal load of 2.16 kg was 1 g/10 minutes. This co-rotating twin-screw extruder has a screw diameter φ of 32 mm and an LID ratio of 53. In the kneaded product, a ratio of the amount of the chemical blowing agent to the amount of the low-density polyethylene was 6/100 on a mass basis. The kneaded product was molten and kneaded using a single-screw extruder, and was formed into a matrix sheet having a thickness of 75 μm using a T-die. In the formation using the T-die, the temperature was adjusted to less than a temperature at which the chemical blowing agent is foamed. SUMIKATHENE is a registered trademark of SUMITOMO CHEMICAL COMPANY, LIMITED.

The matrix sheet was irradiated with an electron beam at an accelerating voltage of 200 kV and a dose of 50 kGy.

This matrix sheet was cut into a rectangular shape. A PBO fiber Zylon HM 1992 having the same length as a long side of the rectangular matrix sheet was disposed to entirely cover one surface of the matrix sheet along a direction parallel to the long side. Another matrix sheet cut into a rectangular shape was stacked on the PBO fiber, and another PBO fiber having the same length as a long side of the rectangle was disposed to cover the entire surface of the matrix sheet along the direction parallel to the long side. This procedure was repeated a given number of times to obtain a composite. The composite was hot-pressed to obtain a preform. For the hot press, the temperature was adjusted to less than a temperature at which the chemical blowing agent is foamed.

The preform was heated to a given temperature to cause foaming of the chemical blowing agent, and the matrix sheets in the preform were foamed thereby. A formed foam body was obtained in this manner. The formed foam body was cut in a direction perpendicular to a fiber direction to obtain a plate-shaped sample according to Example 12. The ratios of the volume of the low-density polyethylene, the volume of the PBO fibers, and the volume of pores to the total volume of the sample were respectively 41%, 2%, and 57%.

<Comparative Example 1>

A sample according to Comparative Example 1 was produced in the same manner as in Example 1, except that the ratios of the volume of the low-density polyethylene and the volume of the pores to the total volume of the sample were adjusted as shown in Table 1 and no PBO fiber was not added.

<Comparative Example 2>

A sample according to Comparative Example 2 was produced in the same manner as in Example 1, except that the amount of the matrix sheets and the amount of the PBO fibers were adjusted so that the ratios of the volume of the low-density polyethylene and the volume of the PBO fibers to the total volume of the sample were adjusted as shown in Table 1 and the matrix sheets were not foamed.

<Comparative Example 3>

A mixture of an acrylonitrile butadiene rubber (NBR) Nipol 1041 manufactured by Zeon Corporation, a chemical blowing agent Vinyfor AC#3-K2 manufactured by EIWA CHEMICAL IND. CO., LTD., a boron nitride SGP manufactured by Denka Company Limited, and an antioxidant Irganox 1010 manufactured by BASF JAPAN LTD. was molten and kneaded at 110°C to obtain a kneaded product. In the kneaded product, a ratio of the amount of the chemical blowing agent to the amount of the NBR was 16/100 on a mass basis. In the kneaded product, a ratio of the amount of the boron nitride to the amount of the NBR was 220/100 on a mass basis. In the kneaded product, a ratio of the amount of the antioxidant to the amount of the NBR was 0.1/100 on a mass basis. Nipol is a registered trademark of Zeon Corporation. Nipol 1041 had a bound acrylonitrile content of 40.5% and a Mooney viscosity of 82.5. The boron nitride SGP had a specific gravity of 2.26, a specific surface area of 2 m$^2$/g, and a $D_{50}$ of 18 μm in a number-based particle size distribution. Irganox is a registered trademark of BASF SE.

The above kneaded product was formed into a sheet by hot press to obtain a sheet according to Comparative Example 3 having a thickness of 0.5 mm. For the hot press, the temperature was adjusted to less than a temperature at which the chemical blowing agent is foamed.

Both surfaces of the sheet according to Comparative Example 3 were irradiated with an electron beam at an accelerating voltage of 600 kV and a dose of 12 kGy. After that, the sheet according to Comparative Example 3 was heated to a given temperature to cause foaming of the chemical blowing agent and foam the sheet. A sample according to Comparative Example 3 being a formed foam body having a thickness of 1200 μm was obtained thereby.

<Comparative Example 4>

A thermally-conductive sheet HT-300HL manufactured by Nitto Shinko Corporation was prepared as a sample according to Comparative Example 4. The sample according to Comparative Example 4 had a thickness of 3000 μm.

<Comparative Example 5>

A heat dissipation sheet SF-ALMO16 manufactured by SEKISUI POLYMATECH CO., LTD. was prepared as a sample according to Comparative Example 5. The sample according to Comparative Example 5 had a thickness of 2000 μm.

As shown in Table 1, the samples according to Examples satisfy the requirements d ≤ 1.1, λ > 1, and 4 ≤ λ/d ≤ 100, which demonstrates that the samples according to Examples each have a reduced weight and a high heat conductivity in the given direction. On the other hand, the samples according to Comparative Examples 4 and 5 which are commercially available have a relatively high density and do not satisfy the requirements d ≤ 1.1 and 4 ≤ λ/d although satisfying the requirement λ > 1. The sample according to Comparative Example 3 which is a formed foam body satisfies the requirement d ≤ 1.1 owing to weight reduction by foaming but does not satisfy the requirements λ > 1 and 4 ≤ λ/d. The sample according to Comparative Example 1 has a low density, but the heat conductivity thereof was unable to be measured because a heat flow was hardly generated in the measurement of the heat conductivity and the heat conductivity was below a lower limit of measurement. The sample according to Comparative Example 2 has a relatively high heat conductivity λ, but does not satisfy the requirement 4 ≤ λ/d.

[Table 1]

| | | Example | | | | | | | | | | | | Comparative Example | | | | |
|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 1 | 2 | 3 | 4 | 5 |
| Matrix resin type | | LDPE | LDPE | LDPE | LDPE | LDPE | LDPE | LDPE | Random PP | LDPE | LDPE | LDPE | LDPE | LDPE | LDPE | NBR | - | - |
| MFR of matrix resin [g/ 10 minutes] | | 75 | 75 | 75 | 75 | 75 | 75 | 75 | 2.4 | 7 | 7 | 7 | 1 | 75 | 75 | - | - | - |
| Fiber or filler type | | PBO | PBO | PBO | PBO | PBO | PBO | PBO | PBO | PBO | Carbon fiber | PBO | PBO | PBO | PBO | BN | - | - |
| Volume ratio [Volume%] | Matrix resin | 15 | 23 | 7 | 13 | 31 | 42 | 30 | 33 | 18 | 29 | 62 | 41 | 64 | 71 | 22 | - | - |
| | Fiber or filler | 4 | 5 | 2 | 6 | 13 | 16 | 24 | 7 | 4 | 10 | 5 | 2 | 0 | 29 | 18 | - | - |
| | Pore (porosity) | 81 | 72 | 92 | 81 | 56 | 42 | 46 | 60 | 78 | 61 | 33 | 57 | 36 | 0 | 60 | - | - |
| Density d [g/cm$^3$] | | 0.197 | 0.262 | 0.098 | 0.219 | 0.488 | 0.664 | 0.617 | 0.36 | 0.17 | 0.482 | 0.62 | 0.406 | 0.409 | 1.093 | 0.594 | 3.261 | 1.744 |
| Heat conductivity $\lambda$ [W/(m·K)] | | 1.72 | 2.53 | 1.86 | 2.73 | 2.89 | 3.76 | 3.94 | 2.12 | 2.31 | 6 | 2.97 | 2 | < 1 | 4.29 | < 1 | 2.91 | 1.25 |
| $\lambda$/d | | 8.7 | 9.7 | 18.9 | 12.5 | 5.9 | 5.7 | 6.4 | 5.9 | 13.6 | 12.5 | 4.8 | 4.9 | < 4 | 3.9 | < 4 | 0.892 | 0.717 |

**Claims**

1. A composite material having a porous structure, the composite material comprising:

    a matrix including an organic polymer and forming the porous structure; and
    a heat-conductive fiber fixed in the porous structure by the matrix, wherein
    a heat conductivity determined at ordinary temperature by a steady state heat flow method in a fiber axis direction of the heat-conductive fiber is 10 W/(m•K) or more,
    a density d [g/cm$^3$] of the composite material and a heat conductivity $\lambda$ [W/(m•K)] in a given direction of the composite material satisfy requirements d $\leq$ 1.1, $\lambda$ > 1, and 4 $\leq$ $\lambda$/d $\leq$ 100, and
    the heat conductivity $\lambda$ is measured for one test specimen in a symmetric configuration according to an American Society for Testing and Materials (ASTM) standard D5470-01 (steady state longitudinal heat flow method).

2. The composite material according to claim 1, wherein the heat-conductive fiber extends along the given direction.

3. The composite material according to claim 2, wherein the heat-conductive fiber extends from one end face of the composite material to the other end face of the composite material in the given direction.

4. A composite material having a porous structure, the composite material comprising:

    a matrix including an organic polymer and forming the porous structure; and
    a heat-conductive fiber fixed in the porous structure by the matrix, wherein
    the heat-conductive fiber extends from one end face of the composite material to the other end face of the composite material in a given direction of the composite material.

5. The composite material according to any one of claims 1 to 4, wherein the matrix includes at least one selected from the group consisting of a thermoplastic resin, a thermoplastic elastomer, and a rubber.

6. The composite material according to any one of claims 1 to 5, having a porosity of 30% to 95%.

7. The composite material according to any one of claims 1 to 6, wherein the heat-conductive fiber is a polybenzazole fiber.

8. The composite material according to any one of claims 1 to 7, wherein a melt mass-flow rate measured for the organic polymer according to Japanese Industrial Standards (JIS) K 7210-1: 2014 at 190°C and a nominal load of 2.16 kg is 1 g/10 minutes to 100 g/10 minutes.

9. The composite material according to any one of claims 1 to 7, wherein a melt mass-flow rate measured for the organic polymer according to Japanese Industrial Standards (JIS) K7210-1: 2014 at 190°C and a nominal load of 2.16 kg is 0.1 g/10 minutes or more and 100 g/10 minutes or less.

10. A preform for a composite material, the preform comprising:

    a matrix including an organic polymer;
    a heat-conductive fiber fixed by the matrix and extending along a given direction; and
    a blowing agent dispersed in the matrix.

11. The preform for a composite material according to claim 10, wherein the blowing agent is a thermo-expandable microcapsule or a chemical blowing agent.

12. A method for manufacturing a composite material having a porous structure, the method comprising:

    supplying a matrix including an organic polymer around a heat-conductive fiber disposed to extend along a given direction; and
    foaming the matrix to form the porous structure, wherein
    a heat conductivity determined at ordinary temperature by a steady state heat flow method in a fiber axis direction of the heat-conductive fiber is 10 W/(m•K) or more.

**13.** The method according to claim 12, further comprising hot-pressing the heat-conductive fiber and the matrix present around the heat-conductive fiber.

**14.** The method according to claim 12 or 13, wherein a melt mass-flow rate measured for the organic polymer according to Japanese Industrial Standards (JIS) K 7210-1: 2014 at 190°C and a nominal load of 2.16 kg is 1 g/10 minutes to 100 g/10 minutes.

**15.** A composite material having a porous structure, the composite material comprising:

a matrix including an organic polymer and forming the porous structure; and
a carbon fiber fixed in the porous structure by the matrix, wherein
a heat conductivity $\lambda_{cf}$ determined at ordinary temperature by the following equation (A) in a fiber axis direction of the carbon fiber is 10 W/(m•K) or more,
a density d [g/cm$^3$] of the composite material and a heat conductivity $\lambda$ [W/(m•K)] in a given direction of the composite material satisfy requirements d $\leq$ 1.1, $\lambda$ > 1, and 4 $\leq$ $\lambda$/d $\leq$ 100, and
the heat conductivity $\lambda$ is measured for one test specimen in a symmetric configuration according to an American Society for Testing and Materials (ASTM) standard D5470-01 (steady state longitudinal heat flow method),

$$\lambda_{cf} \text{ [W/(m•K)]} = 1272.4/ER \text{ [μΩm]} - 49.4 \qquad \text{Equation (A)},$$

where ER represents a specific electrical resistance of the carbon fiber.

FIG. 1

FIG. 2

EP 4 174 138 A1

FIG. 3

FIG. 4

FIG. 5

**INTERNATIONAL SEARCH REPORT**

| International application No. |
| --- |
| PCT/JP2021/024425 |

A. CLASSIFICATION OF SUBJECT MATTER
C08L 101/00(2006.01)i; C08J 9/32(2006.01)i; C08L 79/04(2006.01)i
FI: C08J9/32; C08L101/00; C08L79/04 B
According to International Patent Classification (IPC) or to both national classification and IPC

B. FIELDS SEARCHED

Minimum documentation searched (classification system followed by classification symbols)
C08L101/00; C08J9/32; C08L79/04

Documentation searched other than minimum documentation to the extent that such documents are included in the fields searched
Published examined utility model applications of Japan 1922–1996
Published unexamined utility model applications of Japan 1971–2021
Registered utility model specifications of Japan 1996–2021
Published registered utility model applications of Japan 1994–2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2011-241375 A (SUMITOMO CHEMICAL CO., LTD.) 01 December 2011 (2011-12-01) claims, paragraphs [0019], [0035], [0037]-[0060], examples | 1, 2, 15 |
| X | JP 02-184428 A (SEKISUI CHEMICAL CO., LTD.) 18 July 1990 (1990-07-18) claims, page 2, upper left column, line 3 to page 2, lower left column, line 3, page 3, upper left column, line 4 to page 4, upper right column, line 6, examples | 4-6, 8-12, 14 |
| X | JP 2015-101670 A (TOHO TENAX CO., LTD.) 04 June 2015 (2015-06-04) claims, paragraphs [0059]-[0064], [0109]-[0128], examples | 4-6, 8-14 |
| A | JP 2013-229591 A (SEKISUI CHEMICAL CO., LTD.) 07 November 2013 (2013-11-07) claims, examples, entire text | 1-15 |

☒ Further documents are listed in the continuation of Box C. ☒ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 26 August 2021 (26.08.2021) | 07 September 2021 (07.09.2021) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2021/024425 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2013-229592 A (SEKISUI CHEMICAL CO., LTD.) 07 November 2013 (2013-11-07) claims, examples, entire text | 1-15 |
| A | JP 2012-102263 A (KITAGAWA INDUSTRIES CO., LTD.) 31 May 2012 (2012-05-31) claims, examples, entire text | 1-15 |

Form PCT/ISA/210 (continuation of second sheet) (January 2015)

**INTERNATIONAL SEARCH REPORT**

Information on patent family members

| International application no. |
| --- |
| PCT/JP2021/024425 |

| Patent Documents referred in the Report | Publication Date | Patent Family | Publication Date |
| --- | --- | --- | --- |
| JP 2011-241375 A | 01 Dec. 2011 | US 2011/0260096 A1 claims, paragraphs [0025], [0053], [0057]-[0119], examples DE 102011008465 A CN 102234443 A | |
| JP 02-184428 A | 18 Jul. 1990 | (Family: none) | |
| JP 2015-101670 A | 04 Jun. 2015 | (Family: none) | |
| JP 2013-229591 A | 07 Nov. 2013 | US 2015/0316332 A1 claims and examples US 2019/0136004 A1 WO 2014/083890 A1 EP 2927269 A1 EP 3536739 A1 TW 201420743 A CN 104870536 A KR 10-2015-0090079 A CN 110305357 A | |
| JP 2013-229592 A | 07 Nov. 2013 | US 2015/0316332 A1 claims and examples US 2019/0136004 A1 WO 2014/083890 A1 EP 2927269 A1 EP 3536739 A1 TW 201420743 A CN 104870536 A KR 10-2015-0090079 A CN 110305357 A | |
| JP 2012-102263 A | 31 May 2012 | WO 2012/063672 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014027144 A
- JP 2012102263 A
- JP 2013229591 A
- JP 2013229592 A
- JP 2018127617 A
- JP 3648865 B

### Non-patent literature cited in the description

- **FUJISHIRO et al.** *TEION KOGAKU,* 1993, vol. 28, 533